# FASCICULE DE BREVET EUROPEEN

(11) **EP 1 817 569 B1**
(45) Date de publication et mention de la délivrance du brevet: **13.08.2014**
(21) Numéro de dépôt: 05815138.2
(22) Date de dépôt: 07.11.2005
(51) Int. Cl.: G01N 21/53, G01N 15/14

(54) **DISPOSITIF D'INSPECTION D'UN FLUIDE PAR ILLUMINATION UNIFORME AU MOYEN D'UN GUIDE DE LUMIÈRE CONFORMÉ**
VORRICHTUNG ZUM UNTERSUCHEN EINER FLÜSSIGKEIT DURCH GLEICHMÄSSIGE BELEUCHTUNG MITTELS EINES KONFIGURIERTEN LICHTLEITERS
DEVICE FOR EXAMINING A FLUID BY UNIFORM ILLUMINATION USING A CONFIGURED LIGHT GUIDE

(30) Priorité: 18.11.2004 FR 0412246
(43) Date de publication de la demande: 15.08.2007
(73) Titulaire: HORIBA ABX SAS, 34090 Montpellier (FR)
(72) Inventeur: NERIN, Philippe, F-30114 Nages et Solorgues (FR); MORENO, Paul Résidence ''Le Flores'', Bâtiment 1, F-34070 Montpellier (FR); CREMIEN, Didier, F-34160 Sussargues (FR)
(74) Mandataire: Bezault, Jean
(86) Numéro de dépôt international: PCT/FR2005/002769
(87) Numéro de publication internationale: WO 2006/053960

(56) Documents cités:
- EP-A- 0 801 295
- EP-A- 1 298 460
- WO-A-85/05680
- US-A- 4 752 131

## Description

L'invention concerne le domaine de l'analyse de fluides, et plus particulièrement les dispositifs dédiés à l'analyse (ou l'inspection) de fluides au moyen d'une lumière.

Dans certains domaines, comme par exemple celui de l'analyse médicale (comptage hématologique ou cytométrie de flux), on utilise des dispositifs d'inspection de fluide reposant sur l'interaction entre les différents constituants d'un fluide et une lumière.

Ces dispositifs comprennent généralement un espace de mesure comportant un passage obligé pour le fluide à inspecter, une source délivrant une lumière choisie à des moyens optiques d'illumination chargés d'illuminer le passage obligé avec cette lumière, des moyens optiques chargés de collecter une partie au moins de la lumière ayant traversé le passage obligé et de la délivrer à des moyens chargés d'analyser la lumière collectée afin de délivrer des signaux représentatifs d'informations qu'elle véhicule. Un tel dispositif est notamment décrit dans les documents brevet FR 2653885, US 4,752,131, WO 85/05680 et EP 0801295.

Le document US 4 752131 décrit un appareil à base de laser pour produire des signaux lumineux à partir de particules et/ou de groupes de particules circulant dans un flux testé. Ces signaux sont enregistrés au moyen d'un photo-détecteur sous la forme de fluctuations temporelles de tension ou de courant électrique. Dans cet appareil, un flux enveloppant entoure le flux testé, et sépare le flux testé d'une part d'un transmetteur de lumière laser d'illumination, et d'autre part d'un récepteur de lumière relié au photo-détecteur. Le transmetteur de lumière est une fibre optique qui est munie de moyens pour émettre en sortie un faisceau de lumière parallèle ou focalisé et ayant un diamètre de l'ordre de grandeur des particules et/ou du groupe de particules dans le flux testé. Ce document précise colonne 3 lignes 25 à 34 que c'est la combinaison spécifique du flux enveloppant dans sa disposition particulière, avec l'utilisation de ce type particulier de fibre optique, et de l'application d'une valeur de moindres carrés au degré de dispersion qui permet d'être efficace.

Les informations véhiculées par la lumière collectée sont par exemple relatives aux formes et/ou coefficients de réflexion et/ou coefficients de diffraction et/ou coefficients d'absorption des différents constituants du fluide inspecté. Elles sont obtenues au moyen, par exemple, de mesures par transmission parfaitement connues de l'homme de l'art, et qu'il est inutile de décrire ici.

Par exemple dans le cas d'une analyse hématologique, le dispositif d'inspection doit pouvoir distinguer automatiquement les cellules du sang selon leur famille d'appartenance (principalement les leucocytes (ou globules blancs), et les hématies (ou globules rouges)), ainsi que la variété au sein de leur famille (par exemple les lymphocytes, les monocytes, les neutrophiles et les éosinophiles parmi les leucocytes, ou les réticulocytes parmi les hématies).

Afin que le dispositif d'inspection puisse distinguer les différents constituants en suspension dans le fluide à inspecter, ces derniers doivent recevoir sensiblement la même intensité de lumière dans un même intervalle de temps lorsqu'ils traversent le passage obligé dans l'espace de mesure.

Pour obtenir une répartition de lumière sensiblement uniforme sur toute la surface définie par le passage obligé, il a été proposé d'utiliser une source incohérente, telle qu'une source à incandescence couplée à un diaphragme et un montage optique dit de Köhler. Ce montage consiste à utiliser une première lentille pour former l'image de la source dans le plan de la pupille d'une seconde lentille chargée de former l'image d'un diaphragme dans le plan du passage obligé de l'espace de mesure.

Un premier inconvénient de ce dispositif à montage de Köhler réside dans le fait que son rendement photométrique est médiocre, c'est-à-dire que très peu de lumière est concentrée sur la zone de mesure, rendant ainsi difficiles certaines analyses et plus précisément l'analyse des cellules biologiques.

Pour augmenter le rendement, il est possible d'utiliser des sources de forte puissance, typiquement plusieurs dizaines de Watts. Cependant, de telles sources génèrent une importante quantité de chaleur, susceptible de perturber les analyses, et présentent un fort encombrement.

Un second inconvénient de ce dispositif à montage de Kôhler réside dans le fait qu'il requiert un ensemble de lentilles qu'il est difficile de placer au voisinage de l'espace de mesure. Or, comme le sait l'homme de l'art, plus l'encombrement de la buse d'expulsion de fluide est petit, plus l'ouverture numérique du faisceau d'illumination peut être rendue importante et meilleur est le bilan photométrique. Par conséquent, pour une buse d'expulsion de fluide de diamètre donné, plus l'optique d'illumination est proche du passage obligé, meilleur est le bilan photométrique.

Aucun dispositif d'inspection connu n'étant entièrement satisfaisant, l'invention a donc pour but d'améliorer la situation.

Elle propose à cet effet un dispositif d'inspection optique d'un fluide, comprenant un espace de mesure comportant un passage obligé pour le fluide à inspecter, au moins une source délivrant une lumière choisie à des moyens optiques d'illumination chargés d'illuminer le passage obligé avec cette lumière, des moyens optiques chargés de collecter une partie au moins de la lumière ayant traversé le passage obligé et de la délivrer à des moyens chargés d'analyser la lumière collectée afin de délivrer des signaux représentatifs d'informations qu'elle véhicule.

Les moyens optiques d'illumination comprennent des premiers moyens de guidage de lumière présentant une extrémité, opposée à la source, et conformée de manière à délivrer la lumière, issue de la source, selon une géométrie choisie de sorte qu'elle illumine le passage obligé de façon sensiblement uniforme et sous une intensité sensiblement constante.

Les premiers moyens de guidage de lumière sont réalisés sous la forme d'une fibre optique.

Le dispositif se caractérise par le fait que l'extrémité conformée de la fibre optique comprend un coeur micro-usiné selon une forme choisie sur une longueur choisie afin de permettre la réflexion interne totale de la lumière et afin de délivrer un faisceau de lumière de section transverse présentant la géométrie choisie (par exemple sensiblement rectangulaire).

Le dispositif selon l'invention peut comporter des caractéristiques complémentaires qui peuvent être prises séparément ou en combinaison, et notamment :
- la fibre optique peut être de type multimodes, et éventuellement à saut d'indice,
- la source peut être de type polychromatique,
- la source peut être de type quasi monochromatique,
- en présence de plusieurs sources (quasi) monochromatiques, on peut prévoir des moyens de multiplexage comprenant une entrée couplée à la sortie de chacune de ces sources (quasi) monochromatiques et une sortie couplée à une extrémité d'alimentation des premiers moyens de guidage de lumière, opposée à leur extrémité conformée,
- des moyens de correction peuvent être implantés en amont du passage obligé et chargés de corriger les aberrations chromatiques qui sont introduites par le reste des moyens optiques d'illumination,
- les moyens optiques de collection peuvent comprendre des seconds moyens de guidage de lumière présentant une extrémité de collection orientée vers le passage obligé,
   ► les seconds moyens de guidage de lumière sont par exemple réalisés sous la forme d'une fibre optique,
   ► chaque source peut être située en dehors d'un axe passant par l'extrémité conformée des premiers moyens de guidage de lumière, le passage obligé et l'extrémité de collection des seconds moyens de guidage de lumière. Dans ce cas, chaque source et/ou une partie au moins des moyens d'analyse peuvent être implantés sur une carte électronique,
- chaque source peut être, par exemple, une diode électroluminescente, une diode laser, un laser, une lampe à incandescence ou une lampe à décharges.

L'invention est particulièrement bien adaptée, bien que de façon non limitative, à l'analyse médicale d'échantillons, et en particulier à la cytométrie de flux et au comptage hématologique.

D'autres caractéristiques et avantages de l'invention apparaîtront à l'examen de la description détaillée ci-après, et des dessins annexés, sur lesquels :
- la figure 1 illustre de façon schématique un exemple de réalisation d'un dispositif d'inspection optique de fluide selon l'invention,
- les figures 2A et 2B illustrent un exemple d'extrémité conformée de fibre optique d'illumination, du type dit "à lentille cylindrique", respectivement dans des vues du dessus et de face,
- la figure 3 illustre de façon schématique la forme de la section transverse du faisceau d'illumination obtenue au niveau du passage obligé au moyen de la fibre optique de la figure 2, et
- la figure 4 est une image illustrant le résultat d'une analyse sanguine obtenue avec un dispositif d'inspection selon l'invention.

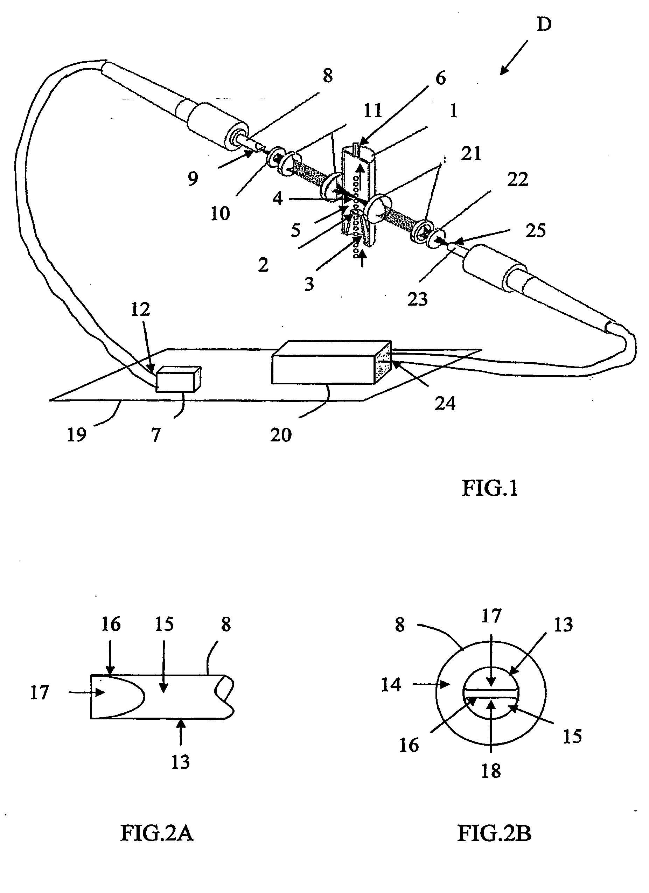

On se réfère tout d'abord aux figures 1 et 2 pour décrire un exemple de réalisation d'un dispositif d'inspection optique de fluide D, selon l'invention.

On considère dans ce qui suit que le dispositif D est dédié à l'inspection (ou analyse) d'un fluide se présentant sous la forme d'un échantillon hématologique, en vue d'un comptage hématologique. Mais, l'invention n'est limitée ni à ce type de fluide, ni au comptage. Elle concerne en effet tout type de fluide, et tout type d'analyse, et notamment la cytométrie de flux.

Comme cela est illustré sur la figure 1, un dispositif d'inspection D, selon l'invention comporte tout d'abord une cuve de mesure 1, de préférence du type dit "à manchonnage de flux", comme par exemple celle décrite dans le document brevet FR 2653885.

De façon simplifiée, une telle cuve 1 comporte une paroi interne dans laquelle est placée une buse de focalisation 2, généralement en saphir et définissant un orifice calibré, typiquement de 60 µm de diamètre. La paroi définit un logement interne 3 dans lequel est placé un capillaire (non représenté) de très petite dimension, typiquement 200 µm de diamètre, et dont l'extrémité est située en regard de la buse 2 et à une petite distance de celle-ci. Ce capillaire est destiné à acheminer le fluide à inspecter en amont de la buse 2 afin d'y être canalisé sous la forme d'un flux primaire par un fluide gainant secondaire circulant dans ledit logement interne 3, autour du capillaire.

La cuve 1 comporte par ailleurs, en aval de la buse 2, un espace de mesure 4 comportant un passage obligé 5 (ou zone de mesure, ou encore fenêtre de mesure) pour le fluide à inspecter délivré par la buse 2.

En raison de la très petite dimension de la buse 2 et de la technique de gainage hydrodynamique utilisée, les cellules de sang (du fluide à inspecter) débouchent une à une au niveau du passage obligé 5 et peuvent ainsi faire l'objet au moins d'une analyse optique, comme on le verra plus loin.

Le fluide à inspecter est collecté dans la partie supérieure de la cuve 1 par un conduit de collection 6, partiellement représenté.

L'analyse optique précitée se fait au moyen d'une interaction entre les cellules (constituants) du fluide à inspecter et un faisceau de lumière au niveau du passage obligé 5 de l'espace de mesure 4.

Le faisceau de lumière, qui illumine le passage obligé 5, est délivré par des moyens optiques d'illumination (ci-après appelés optique d'illumination) alimentés en lumière par au moins une source 7.

La lumière délivrée par la source 7 est choisie, notamment, en fonction des cellules à analyser et/ou du ou des colorants qui peuvent être utilisés pour colorer certaines variétés (ou sous-variétés) de cellules. Il est rappelé que l'on utilise fréquemment des colorants fluorescents pour analyser les cellules. En effet, lorsque le colorant contenu dans les cellules colorées absorbe la (ou l'une des) longueurs d'onde d'émission de la source 7, il réémet quasi-instantanément (typiquement en 10⁻⁸ s) et de façon isotrope un rayonnement appelé fluorescence, de longueur d'onde supérieure à celle du rayonnement d'illumination absorbé. Une partie de cette fluorescence peut donc être collectée, soit à 90° de l'axe optique d'analyse, soit parallèlement à cet axe (épifluorescence).

Selon les besoins, on choisit donc soit une source 7 délivrant une lumière quasi monochromatique, soit une source 7 délivrant une lumière polychromatique.

Comme source quasi monochromatique 7 on peut par exemple utiliser une diode électroluminescente (ou LED pour "Light Emitting Diode"). Mais, on pourrait également utiliser une diode laser ou un laser, dont la longueur d'onde d'émission et la puissance d'émission autorisent éventuellement la fluorescence de composants colorés à analyser.

Comme source polychromatique 7 on peut par exemple utiliser une lampe à incandescence ou une lampe à arc ou bien plusieurs sources (quasi) monochromatiques.

L'optique d'illumination comprend au moins des premiers moyens de guidage de lumière 8 qui présentent une première extrémité 9, opposée à la source 7, et conformée de manière à délivrer la lumière, qui est issue de la source 7, selon une géométrie (ou forme) choisie de sorte qu'elle illumine le passage obligé 5 de façon sensiblement uniforme et sous une intensité sensiblement constante.

En d'autres termes, la première extrémité 9 est conformée afin de délivrer la lumière sous la forme d'un faisceau d'illumination présentant une homogénéité d'intensité sur une surface de forme (ou géométrie) choisie, dans une section transverse.

Il est important de noter que la forme choisie et la surface de la section transverse du faisceau d'illumination, délivré par les premiers moyens de guidage de lumière 8, ne sont pas nécessairement identiques à celles que ledit faisceau d'illumination présente au niveau du passage obligé 5. En effet, comme illustré sur la figure 1, l'optique d'illumination peut comporter, en complément des premiers moyens de guidage de lumière 8, des éléments optiques chargés d'acheminer le faisceau au niveau du passage obligé 5 ainsi qu'éventuellement de le mettre au format du passage obligé 5. Ainsi, on peut prévoir, en sortie des premiers moyens de guidage de lumière 8, une lame de réglage 10, par exemple de type lame à faces parallèles, destinée à contrôler finement le positionnement latéral du faisceau d'illumination par rapport au passage obligé 5, et donc par rapport au fluide à inspecter. On peut également prévoir une optique de projection 11, par exemple constituée d'un couple de lentilles, par exemple de type anamorphique, placé entre la lame de réglage 10 et la cuve 1, et destiné à focaliser le faisceau d'illumination au niveau du passage obligé 5.

Comme cela est mieux illustré sur les figures 2A et 2B, les premiers moyens de guidage de lumière 8 se présentent, de préférence, sous la forme d'une fibre optique dont une seconde extrémité 12, opposée à la première extrémité conformée 9, est couplée à la sortie de la source 7.

Par exemple, la première extrémité conformée 9 de la fibre optique 8 comprend une portion 13 dans laquelle la gaine 14 a été supprimée sur une longueur choisie et la surface externe du coeur 15 a été préférentiellement recouverte (à l'exception d'une partie terminale 16) d'un matériau métallique réfléchissant. La partie terminale 16 du coeur 15 est par exemple micro-usinée selon une forme choisie sur une longueur choisie afin de permettre la réflexion interne totale de la lumière et de délivrer le faisceau d'illumination selon la forme (ou géométrie) choisie précitée (dans sa section transverse). En micro-usinant la partie terminale 16 du coeur 15 on peut en effet ne conserver que sa partie centrale qui, dans le cas des guides de lumière dits à saut d'indice, est la région dans laquelle la lumière présente un champ homogène.

Dans l'exemple illustré sur les figures 2A et 2B, la partie terminale 16 du coeur 15 est micro-usinée de manière à délivrer un faisceau d'illumination présentant une section transverse de forme sensiblement rectangulaire. Le micro-usinage consiste ici à définir dans le coeur 15 deux faces 17 et 18 biseautées, par exemple selon des angles d'environ 50° à 55°, et se terminant légèrement avant leur intersection afin de constituer une partie d'extrémité sensiblement rectangulaire. Les faces biseautées 17 et 18 peuvent par ailleurs présenter un revêtement externe permettant de stopper la lumière réfractée.

Ce type de première extrémité 9 micro-usinée est par exemple réalisé par la société japonaise Namiki. Plus précisément, l'exemple illustré correspond à une extrémité de fibre optique 8 dite "à lentille cylindrique" (ou CLF pour "Cylindrical Lensed Fiber") dont le détail technique peut être notamment trouvé à l'adresse Internet "www.namiki.co.jp/nqt/tp14.html".

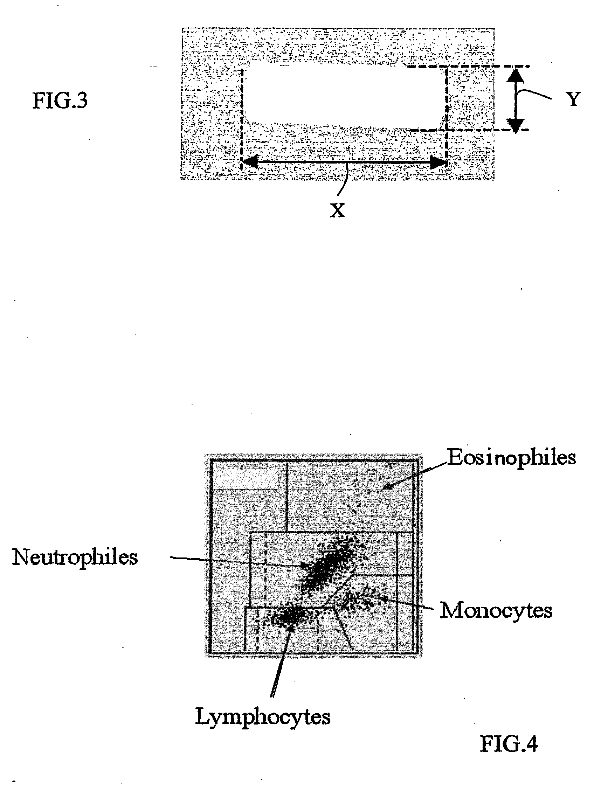

Grâce à ce type de micro-usinage, et en utilisant des éléments optiques du type de ceux présentés ci-avant (lame de réglage 10 et optique de projection 11), la section transverse du faisceau d'illumination peut présenter une forme sensiblement rectangulaire au niveau du passage obligé 5, comme illustré sur la figure 3. Par exemple, en partant d'une fibre optique micro-usinée 8 comportant une partie terminale 16 rectangulaire d'environ 155 µm x 55 µm, on peut obtenir une surface d'illumination rectangulaire présentant une longueur X égale à environ 105 µm et une largeur Y égale à environ 33 µm.

La fibre optique 8 peut être par exemple de type multimodes, et éventuellement à saut d'indice. On peut par exemple utiliser les fibres optiques fabriquées par les sociétés 3M, Lucent Technology et OPS.

Grâce à l'utilisation d'une fibre optique 8, il est possible de déporter la source de lumière 7 sur une carte électronique 19, sur laquelle peut être également implantée une partie au moins des moyens d'analyse 20 sur lesquels on reviendra plus loin. Le déport de la source 7 hors de l'axe optique de la cuve de mesure 1 (c'est-à-dire de l'axe passant par l'extrémité conformée 9 des premiers moyens de guidage de lumière 8, le passage obligé 5 et l'extrémité de collection 25 de seconds moyens de guidage de lumière 23 qui seront décrits plus loin) est particulièrement avantageux car il permet d'éliminer les sources de chaleur de l'environnement immédiat de ladite cuve 1.

Par ailleurs, grâce à l'invention le dispositif d'inspection D est notablement plus simple qu'un dispositif équivalent comportant un montage de Köhler, tant sur le plan mécanique que sur le plan optique, étant donné que la première extrémité 9 de la fibre optique 8 peut être placée en lieu et place du couple de lentilles asphériques dudit montage de Köhler et qu'il n'est plus nécessaire d'utiliser un condenseur et un diffuseur.

En outre, l'utilisation d'une fibre optique 8 permet la miniaturisation de la cuve de mesure 1.

De plus, en raison de la très grande précision du micro-usinage et de son haut niveau de reproductibilité, il est possible de supprimer une partie des moyens de réglage micrométrique de la cuve de mesure 1, renforçant ainsi la reproductibilité des performances offertes par les dispositifs d'inspection D.

Il est important de noter qu'en présence d'une source 7 polychromatique, on peut prévoir en complément de l'optique d'illumination 8-12 une optique de correction (non représentée) destinée à supprimer une partie au moins des aberrations chromatiques introduites par ladite optique d'illumination. En outre, cette même optique peut-être conçue de manière à corriger les aberrations géométriques introduites par les parois de la cuve et par l'épaisseur de fluide traversée. Cette correction peut se faire par l'intermédiaire d'optiques possédant un ou plusieurs dioptres asphériques dont l'un au moins peut posséder un réseau de diffraction destiné à la correction du chromatisme.

Par ailleurs, l'utilisation d'une fibre optique 8 permet d'équiper le dispositif d'inspection D de plusieurs sources de lumière (quasi) monochromatiques émettant à des longueurs d'onde différentes. Dans ce cas, chaque source est couplée à l'une des entrées d'un multiplexeur dont la sortie est couplée à l'entrée de la fibre optique 8.

Comme évoqué précédemment, l'interaction entre le faisceau d'illumination délivré par l'optique d'illumination, décrite ci-avant, et le fluide à inspecter se fait au niveau du passage obligé 5 de la cuve de mesure 1. Le résultat de cette interaction est analysé par des moyens d'analyse 20 traditionnels, comme par exemple un ou plusieurs détecteurs photoélectriques, lesquels ne seront pas décrits ici, via des moyens optiques de collection 21-25 placés en aval de la cuve de mesure 1.

Plus précisément, dans l'exemple de réalisation, non limitatif, illustré sur la figure 1, les moyens optiques de collection (ou plus simplement l'optique de collection) comprennent un couple de lentilles 21, par exemple de type anamorphique, destiné à collecter la lumière ayant traversé l'espace de mesure 4, suivi d'une lame de réglage 22, par exemple de type lame à faces parallèles, destinée à introduire de façon précise la lumière collectée dans des seconds moyens de guidage de lumière 23 dont la sortie 24 est couplée aux moyens de détection destinés à l'analyse 20.

Le principe de la (photo-)détection est bien connu. Il est simplement rappelé que chaque constituant (ou cellule ou encore particule) du fluide à inspecter, coloré ou non, qui parvient au niveau du passage obligé 5, absorbe et/ou diffracte et/ou réfléchit la lumière, mise en forme par l'optique d'illumination (et principalement par ses premiers moyens de guidage de lumière 8) et présentant une uniformité et une intensité sensiblement constante sur sensiblement toute la surface dudit passage obligé 5. Ces interactions contribuent à diminuer la composante continue du signal photoélectrique qui est délivré par les détecteurs photoélectriques (en l'absence d'interaction), ce qui se traduit par des impulsions électriques dont les formes et durées respectives sont caractéristiques des constituants ayant interagi avec la lumière d'illumination.

Un exemple d'image, représentative d'une matrice de répartition des populations leucocytaires d'un échantillon sanguin, obtenue avec un dispositif d'inspection D selon l'invention, est illustré sur la figure 4. On peut y voir dans la partie supérieure droite une population d'éosinophiles, dans la partie centrale une population de neutrophiles; dans le coin inférieur droit une population de monocytes et dans la partie centrale inférieure une population de lymphocytes.

Préférentiellement, les seconds moyens de guidage de lumière 23 sont réalisés sous la forme d'une fibre optique dont une première extrémité 25 est alimentée en lumière collectée (ici par la lame de réglage 22) et une seconde extrémité définit la sortie 24.

Grâce à cette fibre optique de collection 23, il est possible de déporter le(s) photodétecteur(s) hors de l'axe optique de la cuve de mesure 1, par exemple sur la carte électronique 19, et donc de simplifier encore plus le montage tant sur le plan mécanique que sur le plan optique.

L'invention ne se limite pas aux modes de réalisation de dispositif d'inspection optique de fluide décrits ci-avant, seulement à titre d'exemple, mais elle englobe toutes les variantes que pourra envisager l'homme de l'art dans le cadre des revendications ci-après.

## Revendications

1. Dispositif (D) d'inspection optique d'un fluide, comprenant i) un espace de mesure (4) comportant un passage obligé (5) pour un fluide à inspecter, ii) au moins une source (7) propre à délivrer une lumière choisie, iii) des moyens optiques d'illumination (8-12) alimentés en lumière par ladite source (7) et agencés pour illuminer ledit passage obligé (5) avec ladite lumière selon des caractéristiques géométriques choisies, iv) des moyens optiques de collection (21-24) agencés pour collecter une partie au moins de la lumière ayant traversé ledit passage obligé (5) et la délivrer en un endroit choisi, et v) des moyens d'analyse (20) alimentés en lumière collectée par lesdits moyens optiques de collection (21-25) et agencés pour analyser ladite lumière collectée de manière à délivrer des signaux représentatifs d'informations qu'elle véhicule, lesdits moyens optiques d'illumination (8-12) comprenant des premiers moyens de guidage de lumière (8) présentant une extrémité (9), opposée à ladite source (7), et conformée de manière à délivrer ladite lumière issue de la source (7) selon une géométrie choisie de sorte qu'elle illumine ledit passage obligé (5) de façon sensiblement uniforme et sous une intensité sensiblement constante, lesdits premiers moyens de guidage de lumière (8) étant réalisés sous la forme d'une fibre optique, **caractérisé en ce que** ladite extrémité conformée (9) de la fibre optique (8) comprend un coeur (15) micro-usiné selon une forme choisie sur une longueur choisie de manière à permettre une réflexion interne totale de ladite lumière et à délivrer un faisceau de lumière de section transverse présentant ladite géométrie choisie.

2. Dispositif selon la revendication 1, **caractérisé en ce que** ladite géométrie choisie est de forme sensiblement rectangulaire.

3. Dispositif selon l'une des revendications 1 et 2, **caractérisé en ce que** ladite fibre optique (8) est de type multimodes.

4. Dispositif selon la revendication 3, **caractérisé en ce que** ladite fibre optique (8) multimodes est à saut d'indice.

5. Dispositif selon l'une des revendications 1 à 4, **caractérisé en ce que** ladite source (7) est de type polychromatique.

6. Dispositif selon l'une des revendications 1 à 4, **caractérisé en ce que** ladite source (7) est de type quasi monochromatique.

7. Dispositif selon l'une des revendications 1 à 4, **caractérisé en ce qu** il comprend au moins deux sources (7) de type quasi monochromatique, émettant selon des longueurs d'onde différentes.

8. Dispositif selon la revendication 7, **caractérisé en ce qu'**il comprend des moyens de multiplexage comprenant une entrée couplée à la sortie de chacune desdites sources quasi monochromatiques (7) et une sortie couplée à une extrémité d'alimentation (12) desdits premiers moyens de guidage de lumière (8), opposée à ladite extrémité conformée (9).

9. Dispositif selon l'une des revendications 5 à 8, **caractérisé en ce qu'**il comprend des moyens de correction implantés en amont dudit passage obligé (5) et propres à corriger des aberrations chromatiques introduites par lesdits moyens optiques d'illumination (8-12).

10. Dispositif selon l'une des revendications 1 à 9, **caractérisé en ce que** lesdits moyens optiques de collection (21-25) comprennent des seconds moyens de guidage de lumière (23) présentant une extrémité de collection (25) orientée vers ledit-passage obligé (5).

11. Dispositif selon la revendication 10, **caractérisé en ce que** lesdits seconds moyens de guidage de lumière (23) sont réalisés sous la forme d'une fibre optique.

12. Dispositif selon l'une des revendications 10 et 11, **caractérisé en ce que** ladite source (7) est située en dehors d'un axe passant par ladite extrémité conformée (9) desdits premiers moyens de guidage de lumière (8), ledit passage obligé (5) et ladite extrémité de collection (25) desdits seconds moyens de guidage de lumière (23).

13. Dispositif selon l'une des revendications 1 à 12, **caractérisé en ce qu'**il comprend une carte électronique (19) sur laquelle sont implantées chaque source (7) et/ou une partie au moins desdits moyens d'analyse (20).

14. Dispositif selon l'une des revendications 1 à 13, **caractérisé en ce que** chaque source (7) est choisie dans un groupe comprenant au moins des diodes électroluminescentes, des diodes laser, des lasers, des lampes à incandescence et des lampes à décharges.

15. Utilisation d'un dispositif d'inspection (D) selon l'une des revendications précédentes dans le domaine de l'analyse médicale d'échantillons, et en particulier la cytométrie de flux et le comptage hématologique.

## Patentansprüche

1. Vorrichtung (D) für die optische Untersuchung eines Fluids, die umfasst: i) einen Messraum (4), der einen erzwungenen Durchlass (5) für ein zu untersuchendes Fluid enthält, ii) wenigstens eine Quelle (7), die dafür geeignet ist, ausgewähltes Licht auszugeben, iii) optische Beleuchtungsmittel (8-12), die mit Licht durch die Quelle (7) versorgt werden und dafür ausgelegt sind, den erzwungenen Durchlass (5) mit dem Licht entsprechend den gewählten geometrischen Eigenschaften zu beleuchten, iv) optische Sammelmittel (21-24), die dafür ausgelegt sind, wenigstens einen Teil des Lichts, das durch den erzwungenen Durchlass (5) gegangen ist, zu sammeln und ihn an einen gewählten Ort auszugeben, und v) Analysemittel (20), die mit dem von den optischen Sammelmitteln (21-25) gesammelten Licht versorgt werden und dafür ausgelegt sind, das gesammelte Licht zu analysieren, derart, dass Signale ausgegeben werden, die Informationen repräsentieren, die es transportiert, wobei die optischen Beleuchtungsmittel (8-12) erste Lichtführungsmittel (8) umfassen, die ein Ende (9) gegenüber der Quelle (7) aufweisen, das so angepasst ist, dass es Licht, das von der Quelle (7) ausgegeben wird, längs einer gewählten Geometrie in der Weise ausgibt, dass es den erzwungenen Durchlass (5) im Wesentlichen gleichmäßig und mit einer im Wesentlichen konstanten Intensität beleuchtet, wobei die ersten Lichtführungsmittel (8) in Form einer Lichtleitfaser verwirklicht sind, **dadurch gekennzeichnet, dass** das angepasste Ende (9) der Lichtleitfaser (8) einen Kern (15) aufweist, der in Übereinstimmung mit einer gewählten Form auf einer Länge mikrobearbeitet ist, die so gewählt ist, dass eine interne Totalreflexion des Lichts ermöglicht wird und ein Lichtstrahlenbündel, das einen die gewünschte Geometrie aufweisenden Querschnitt besitzt, ausgegeben wird.

2. Vorrichtung nach Anspruch 1, **dadurch gekennzeichnet, dass** die gewählte Geometrie eine im Wesentlichen rechtwinklige Form hat.

3. Vorrichtung nach einem der Ansprüche 1 und 2, **dadurch gekennzeichnet, dass** die Lichtleitfaser (8) vom Multimodentyp ist.

4. Vorrichtung nach Anspruch 3, **dadurch gekennzeichnet, dass** die Multimoden-Lichtleitfaser (8) einen Indexsprung aufweist.

5. Vorrichtung nach einem der Ansprüche 1 bis 4, **dadurch gekennzeichnet, dass** die Quelle (7) vom polychromatischen Typ ist.

6. Vorrichtung nach einem der Ansprüche 1 bis 4, **dadurch gekennzeichnet, dass** die Quelle (7) vom quasi-monochromatischen Typ ist.

7. Vorrichtung nach einem der Ansprüche 1 bis 4, **dadurch gekennzeichnet, dass** sie wenigstens zwei Quellen (7) des quasi-monochromatischen Typs umfasst, die mit unterschiedlichen Wellenlängen emittieren.

8. Vorrichtung nach Anspruch 7, **dadurch gekennzeichnet, dass** sie Multiplexierungsmittel umfasst, die einen mit dem Ausgang jeder der quasi-monochromatischen Quellen (7) gekoppelten Eingang und einen mit einem Versorgungsende (12) der ersten Lichtführungsmittel (8) gegenüber dem angepassten Ende (9) gekoppelten Ausgang aufweisen.

9. Vorrichtung nach einem der Ansprüche 5 bis 8, **dadurch gekennzeichnet, dass** sie Korrekturmittel umfasst, die stromaufseitig des erzwungenen Durchlasses (5) implantiert sind und dafür geeignet sind, chromatische Aberrationen, die durch die optischen Beleuchtungsmittel (8-12) eingeführt werden, zu korrigieren.

10. Vorrichtung nach einem der Ansprüche 1 bis 9, **dadurch gekennzeichnet, dass** die optischen Sammelmittel (21-25) zweite Lichtführungsmittel (23) umfassen, die ein zu dem erzwungenen Durchlass (5) gerichtetes Sammelende (25) aufweisen.

11. Vorrichtung nach Anspruch 10, **dadurch gekennzeichnet, dass** die zweiten Lichtführungsmittel (23) in Form einer Lichtleitfaser verwirklicht sind.

12. Vorrichtung nach einem der Ansprüche 10 und 11, **dadurch gekennzeichnet, dass** sich die Quelle (7) außerhalb einer Achse befindet, die durch das angepasste Ende (9) der ersten Lichtführungsmittel (8), den erzwungenen Durchlass (5) und das Sammelende (25) der zweiten Lichtführungsmittel (23) verläuft.

13. Vorrichtung nach einem der Ansprüche 1 bis 12, **dadurch gekennzeichnet, dass** sie eine elektronische Karte (19) umfasst, auf der jede Quelle (7) und/oder wenigstens ein Teil der Analysemittel (20) implantiert sind.

14. Vorrichtung nach einem der Ansprüche 1 bis 13, **dadurch gekennzeichnet, dass** jede Quelle (7) aus einer Gruppe gewählt ist, die wenigstens Elektrolumineszenzdioden, Diodenlaser, Laser, Glühlampen und Entladungslampen umfasst.

15. Verwendung einer Untersuchungsvorrichtung (D) nach einem der vorhergehenden Ansprüche auf dem Gebiet der medizinischen Analyse von Proben und insbesondere der Durchflusszytometrie und der hämatologischen Zählung.

## Claims

1. A device (D) for optically examining a fluid, comprising i) a measuring space (4) having a compulsory passage (5) for a fluid that is to be examined, ii) at least one source (7) configured to deliver a selected light, iii) optical illuminating means (8-12) supplied with light by the source (7) and arranged to illuminate the compulsory passage (5) with the light according to selected geometric characteristics, iv) optical collecting means (21-24) arranged to collect at least some of the light that has passed through the compulsory passage (5) and to deliver it to a selected location, and (v) analyzing means (20) supplied with the light collected by the optical collecting means (21-25) and arranged to analyze the collected light so as to deliver signals representing data which the collected light carries, the optical illuminating means (8-12) comprising first light guiding means (8) having one end (9) opposite the source (7), and configured to deliver the light derived from the source (7) in accordance with a selected geometry so that it illuminates the compulsory passage (5) in a substantially uniform manner and at a substantially constant intensity, the first light guiding means (8) taking the form of an optical fiber, wherein the configured end (9) of the optical fiber (8) comprises a core (15) micromachined in a selected shape along a selected length so as to allow total internal reflection of the light and to deliver a light beam with a cross-section having the selected geometry.

2. A device according to claim 1, wherein the selected geometry is substantially rectangular in shape.

3. A device according to either of claims 1 and 2, wherein the optical fiber (8) is of multimodal type.

4. A device according to claim 3, wherein the multimodal optical fiber (8) has an index difference.

5. A device according to one of claims 1 to 4, wherein the source (7) is of polychromatic type.

6. A device according to one of claims 1 to 4, wherein the source (7) is of quasi monochromatic type.

7. A device according to one of claims 1 to 4, comprising at least two sources (7) of a quasi monochromatic type emitting at different wavelengths.

8. A device according to claim 7, comprising multiplexing means having an input coupled to the output of each of the quasi monochromatic sources (7) and an output coupled to a supply end (12) of the first light guiding means (8), opposite the configured end (9).

9. A device according to one of claims 5 to 8, comprising correcting means installed upstream of the compulsory passage (5) and configured to correct chromatic aberrations introduced by the optical illuminating means (8-12).

10. A device according to one of claims 1 to 9, wherein the optical collecting means (21-25) comprises second light guiding means (23) having a collecting end (25) oriented towards the compulsory passage (5).

11. A device according to claim 10, wherein the second light guiding means (23) take the form of an optical fiber.

12. A device according to either of claims 10 and 11, wherein the source (7) is located outside an axis passing through the configured end (9) of the first light guiding means (8), the compulsory passage (5), and the collecting end (25) of the second light guiding means (23).

13. A device according to one of claims 1 to 12, comprising an electronic card (19) on which are implanted each source (7) and/or at least some of the analyzing means (20).

14. A device according to one of claims 1 to 13, wherein each source (7) is selected from a group comprising at least light emitting diodes, laser diodes, lasers, incandescent lamps, and discharge lamps.

15. Use of an examining device (D) according to one of the preceding claims in the field of medical analysis of samples, and in particular flow cytometry and haematological counting.
